# FASCICULE DE BREVET EUROPEEN

(11) **EP 2 935 897 B1**
(45) Date de publication et mention de la délivrance du brevet: **20.03.2019**
(21) Numéro de dépôt: 13818354.6
(22) Date de dépôt: 18.12.2013
(51) Int. Cl.: F04D 29/063, F04D 29/16

(54) **ASSEMBLAGE D'ÉTANCHÉITÉ POUR TURBOMACHINE**
DICHTUNGSANORDNUNG FÜR EINE TURBOMASCHINE
SEALING ASSEMBLY FOR TURBOMACHINE

(30) Priorité: 21.12.2012 FR 1262620
(43) Date de publication de la demande: 28.10.2015
(73) Titulaire: Safran Helicopter Engines, 64510 Bordes (FR)
(72) Inventeur: BRILLET, Christophe, Michel, Georges, Marcel, F-64290 Gan (FR); CHABANNE, Pierre, F-64320 Idron (FR); GIRARDOT, Julien, F-64510 Angais (FR); SCUILLER, Lionel, F-64140 Billere (FR)
(74) Mandataire: Gevers & Orès
(86) Numéro de dépôt international: PCT/FR2013/053174
(87) Numéro de publication internationale: WO 2014/096708

(56) Documents cités:
- EP-A1- 0 831 204
- EP-A1- 1 577 495
- WO-A1-2012/033192
- FR-A1- 2 952 138
- JP-U- S63 198

## Description

### DOMAINE DE L'INVENTION

L'invention concerne le domaine des turbomachines. Bien qu'elle ait été conçue pour un turbomoteur d'aéronef et soit décrite ci-après en relation avec un tel turbomoteur, l'invention se rapporte plus généralement à une turbomachine, notamment pour aéronef.

### ÉTAT DE LA TECHNIQUE

Une turbomachine selon l'état de la technique est divulguée par exemple dans FR 2 952 138 A1. Un turbomoteur comprend de manière connue un conduit d'entrée d'air, un premier étage de compression de l'air comprenant une roue mobile de compresseur sur laquelle débouche le conduit, un canal d'acheminement de l'air comprimé par le premier étage de compression jusqu'à un second étage de compression, une chambre de combustion d'un mélange de carburant et de l'air comprimé par les étages de compression et un ou plusieurs étages de détente des gaz issus de la combustion.

Dans un tel turbomoteur, il est connu de disposer des joints d'étanchéité entre certaines parties mobiles (rotor) et certaines parties fixes (stator) du turbomoteur, notamment, d'une part, entre le conduit d'entrée d'air et l'avant de la première roue mobile de compresseur, et, d'autre part, entre le canal d'acheminement d'air comprimé et l'arrière de la première roue mobile de compresseur. Les termes « avant » et « arrière » s'entendent par rapport au sens de l'axe du turbomoteur suivant lequel s'écoule globalement le flux d'air dans le turbomoteur en fonctionnement.

Ainsi, il est connu de disposer, entre la portion avant de la première roue mobile de compresseur et le conduit d'entrée d'air, un dispositif d'étanchéité comprenant deux joints d'étanchéité. Ce dispositif d'étanchéité communique, par le joint avant, avec un palier de guidage de l'arbre du rotor de la turbomachine monté en avant du dispositif et comprenant de l'huile de lubrification.

Afin de maintenir l'huile dans le palier de guidage pour éviter qu'elle s'échappe dans le conduit d'entrée d'air et entraine un dysfonctionnement du turbomoteur, on achemine de l'air du canal d'acheminement, situé en aval du premier étage de compression, jusqu'au dispositif d'étanchéité de sorte à maintenir les deux joints d'étanchéité du dispositif sous pression. Les termes « amont » et « aval » s'entendent par rapport au sens de l'écoulement du flux d'air.

Plus précisément, une partie du flux d'air circulant dans le canal d'acheminement est dévié vers un second dispositif d'étanchéité comprenant un joint d'étanchéité ayant pour fonction de limiter le débit d'air centrifuge s'écoulant le long de la face arrière de la première roue mobile de compresseur. En effet, le flux d'air détendu qui s'écoule le long de la face arrière de la roue mobile se mélangeant ensuite au flux d'air comprimé par ladite roue, un débit d'air trop important derrière la roue réduirait l'efficacité de la compression.

Une partie du flux d'air traversant le joint du second dispositif s'écoule donc le long de la face arrière de la première roue mobile tandis que l'autre partie s'écoule, le long de l'arbre du rotor, jusqu'à une cavité s'étendant entre les deux joints du premier dispositif d'étanchéité de sorte à les maintenir sous pression. L'air de la cavité qui maintient les deux joints sous pression s'écoule ensuite, d'une part, vers le palier de guidage à travers le joint avant du premier dispositif d'étanchéité et, d'autre part, vers le conduit d'entrée d'air à travers le joint arrière du premier dispositif d'étanchéité. Le débit de l'air est donc notablement diminué lors de son passage à travers le joint du second dispositif d'étanchéité mais permet, en général, de maintenir les joints du premier dispositif d'étanchéité suffisamment sous pression pour éviter que l'huile du palier de guidage ne fuie dans le conduit d'entrée d'air du turbomoteur.

Un problème se pose toutefois lorsqu'une baisse de pression intervient dans le conduit d'entrée d'air en amont de la première roue mobile de compresseur provoquée, par exemple, par la présence d'une grille dite de pré-rotation destinée à orienter le flux d'air à l'entrée de la roue mobile ou par la présence de glace obstruant le conduit lors de l'utilisation du turbomoteur en conditions givrantes.

En effet, une telle baisse de pression dans le conduit d'entrée d'air entraine une baisse de pression dans la cavité s'étendant entre les joints du premier dispositif d'étanchéité qui peut alors provoquer la fuite de l'huile, contenue dans le palier de guidage, dans le conduit d'entrée d'air et donc un dysfonctionnement du turbomoteur, ce qui présente un inconvénient notable.

### EXPOSÉ DE L'INVENTION

L'invention vise à améliorer les turbomachines existantes et plus particulièrement à éviter que l'huile de lubrification contenue dans le palier de guidage ne fuie dans le conduit d'entrée d'air du turbomoteur.

Ainsi, l'invention a pour objet une turbomachine comprenant :
- un conduit d'entrée d'air,
- un étage de compression d'air comprenant au moins une roue mobile de compresseur et sur lequel débouche le conduit d'entrée d'air,
- un premier dispositif d'étanchéité, disposé entre une portion avant de la roue mobile de compresseur et le conduit d'entrée d'air, comprenant au moins un joint d'étanchéité,
- un canal d'acheminement de l'air comprimé par la roue mobile,
- un second dispositif d'étanchéité, disposé entre une portion arrière de la roue mobile de compresseur et le canal d'acheminement et configuré pour recevoir un flux d'air provenant du canal d'acheminement,
ladite turbomachine étant remarquable en ce que le second dispositif d'étanchéité est configuré pour autoriser un prélèvement d'une partie de l'air le traversant, l'air prélevé étant acheminé jusqu'au joint d'étanchéité du premier dispositif d'étanchéité de sorte à le maintenir sous pression.

Par les termes « maintenir sous pression », on entend maintenir sous une pression suffisante pour éviter que de l'huile de lubrification ne traverse le premier dispositif d'étanchéité et ne fuie, notamment dans le conduit d'entrée d'air.

De préférence, la turbomachine comprend un palier de guidage disposé en avant du joint d'étanchéité du premier dispositif d'étanchéité et comprenant de l'huile de lubrification, l'huile étant maintenue dans le palier de guidage par de l'air sous pression s'écoulant, à travers le joint, du premier dispositif vers le palier.

Le second dispositif d'étanchéité est donc configuré de sorte que le débit d'air prélevé lors de son passage dans ledit dispositif soit suffisamment élevé pour que, une fois acheminé jusqu'au joint d'étanchéité du premier dispositif d'étanchéité, l'air maintienne ledit joint sous pression. La turbomachine selon l'invention permet avantageusement de maintenir le joint du premier dispositif d'étanchéité sous pression, même en cas de chute de pression dans le conduit d'entrée d'air.

De préférence, le second dispositif d'étanchéité est configuré de sorte à fournir, d'une part, un premier flux d'air dont le débit est suffisant pour maintenir le joint du premier dispositif d'étanchéité sous pression et, d'autre part, un second flux d'air dont le débit est suffisamment faible pour éviter de perturber l'écoulement de l'air le long de la face arrière de la roue mobile de compresseur. Ainsi, d'une part, l'huile ne fuit pas dans le conduit d'entrée d'air à travers le joint du premier dispositif et, d'autre part, l'efficacité de la compression de l'air n'est pas diminuée par l'air débouchant du second dispositif à l'arrière de la roue mobile.

Ainsi, selon une caractéristique de l'invention, le second dispositif d'étanchéité est configuré de sorte que la diminution de débit de l'air entrant, depuis le canal d'acheminement d'air comprimé, dans le second dispositif d'étanchéité et le débit de l'air prélevé, lors de son passage dans ledit dispositif, reste suffisamment faible pour que le flux d'air prélevé dans le second dispositif et acheminé jusqu'au joint d'étanchéité du premier dispositif d'étanchéité maintienne celui-ci sous pression. Un tel calibrage peut être réalisé, par exemple, en choisissant l'endroit dans le second dispositif d'étanchéité au niveau duquel l'air est prélevé.

Et, selon une autre caractéristique de l'invention, le second dispositif d'étanchéité est configuré de sorte à réduire au maximum le débit de l'air le traversant intégralement, c'est-à-dire l'air non prélevé lors de son passage dans le second dispositif d'étanchéité, qui s'écoule ensuite le long de la face arrière de la roue mobile. Une telle réduction du débit d'air permet de réduire notablement voire d'éviter les perturbations de l'écoulement centrifuge de l'air le long de la face arrière de la roue mobile de compresseur et donc également du flux d'air réintroduit par l'arrière de la première roue mobile dans le flux d'air comprimé par la première roue mobile, ce qui permet d'améliorer ainsi l'efficacité de la compression.

Selon un aspect de l'invention, le second dispositif d'étanchéité comprend au moins un joint d'étanchéité.

Les joints d'étanchéité du premier et/ou du second dispositif d'étanchéité peuvent être, par exemple, un joint à labyrinthe, un joint à brosse, un joint à section calibrée ou bien un joint à bague carbone.

De manière préférée, le second dispositif d'étanchéité comprend au moins un bloc en matériau abradable et le ou les joints d'étanchéité du second dispositif d'étanchéité sont des joints à labyrinthe comprenant chacun un ensemble de léchettes coopérant avec le ou les blocs en matériau abradable. Dans un tel cas, le calibrage de la pression de l'air prélevé peut être réalisé, par exemple, en fonction de l'endroit où est prélevé l'air dans le ou les joints et/ou en adaptant le nombre et/ou la forme des léchettes.

De même, le premier dispositif d'étanchéité comprend avantageusement au moins un bloc en matériau abradable et le ou les joints d'étanchéité du premier dispositif d'étanchéité sont des joints à labyrinthe comprenant chacun un ensemble de léchettes coopérant avec le ou les blocs en matériau abradable.

De manière avantageuse, les léchettes du ou des joints d'étanchéité sont disposées consécutivement et parallèlement, de préférence perpendiculairement à l'axe longitudinal de la turbomachine.

Dans une forme de réalisation de l'invention, le second dispositif d'étanchéité comprend un unique joint d'étanchéité configuré pour autoriser un prélèvement d'une partie de l'air le traversant. Par exemple, un canal de prélèvement d'air peut être aménagé entre les deux extrémités du joint du second dispositif d'étanchéité pour effectuer ledit prélèvement.

Dans une autre forme de réalisation de l'invention, le second dispositif d'étanchéité comprend un joint d'étanchéité avant et un joint d'étanchéité arrière, l'air étant prélevé entre les deux joints d'étanchéité. Ainsi, l'air provenant du canal d'acheminement d'air comprimé traverse, dans le sens de l'arrière vers l'avant, le joint d'étanchéité arrière puis s'écoule en partie entre les deux joints jusqu'au joint d'étanchéité du premier dispositif d'étanchéité afin de le maintenir sous pression. Un canal de prélèvement d'air peut être aisément réalisé entre les deux joints qui peuvent ainsi, par exemple, être montés sur des éléments différents du turbomoteur.

Avantageusement, une cavité est ménagée entre le joint d'étanchéité avant et le joint d'étanchéité arrière du second dispositif d'étanchéité de sorte à former une poche d'air sous pression entre les deux joints dans laquelle l'air est prélevé pour être acheminé jusqu'au joint d'étanchéité du premier dispositif d'étanchéité. Le joint avant et le joint arrière du second dispositif d'étanchéité peuvent être espacés, par exemple, d'une distance supérieure à 1 mm, de préférence comprise entre 2 et 10 mm.

De préférence, le joint d'étanchéité arrière du second dispositif d'étanchéité est configuré de sorte que la pression de l'air prélevé lors de son passage dans le second dispositif d'étanchéité est suffisante pour maintenir le joint d'étanchéité du premier dispositif d'étanchéité sous pression et éviter ainsi les fuites d'huile du palier de guidage. Un tel calibrage de la pression de l'air prélevé peut être réalisé, par exemple, en adaptant le nombre et/ou la forme des léchettes dans le cas d'un joint à labyrinthe.

Avantageusement, le joint d'étanchéité arrière du second dispositif comprend entre une et trois léchettes, de préférence deux léchettes.

De préférence encore, le joint d'étanchéité avant du second dispositif d'étanchéité est configuré de sorte à réduire au maximum le débit de l'air le traversant de manière à éviter les perturbations de l'écoulement d'air dans la partie arrière de la roue mobile de compresseur sur laquelle débouche ledit joint (dans le sens de l'amont vers l'aval). Par le terme « maximum », on entend que le débit du flux d'air débouchant du joint d'étanchéité avant est suffisamment faible pour éviter un écoulement d'air, à l'arrière de la roue mobile, qui serait susceptible de réduire notablement l'efficacité de la compression.

Avantageusement, le joint d'étanchéité avant du second dispositif comprend au moins deux léchettes, de préférence quatre de manière à diminuer suffisamment le débit du flux d'air le traversant.

De manière préférée, le premier dispositif d'étanchéité comprend un joint d'étanchéité avant et un joint d'étanchéité arrière. Le flux d'air prélevé au niveau du second dispositif d'étanchéité permet de maintenir sous pression le joint d'étanchéité avant voire les deux joints d'étanchéité du premier dispositif.

Selon un aspect de l'invention, la turbomachine comprend un second étage de compression comprenant une seconde roue mobile de compresseur dont une portion avant est relié à une portion arrière de la première roue mobile de compresseur au niveau du second dispositif d'étanchéité par un accouplement, par exemple à engrenage droit (« curvic coupling » en langue anglaise), dans lequel est ménagé un passage, l'air prélevé lors du passage du flux d'air à travers le second dispositif d'étanchéité s'écoulant à travers ledit passage avant d'être acheminé vers le joint avant du premier dispositif pour le maintenir sous pression.

L'invention concerne aussi un procédé pour maintenir sous pression au moins un joint d'étanchéité par de l'air prélevé dans une turbomachine comprenant :
- un conduit d'entrée d'air,
- un étage de compression d'air comprenant au moins une roue mobile de compresseur et sur lequel débouche le conduit d'entrée d'air,
- un premier dispositif d'étanchéité, disposé entre une portion avant de la roue mobile de compresseur et le conduit d'entrée d'air, comprenant au moins un joint d'étanchéité,
- un canal d'acheminement de l'air comprimé par la roue mobile,
- un second dispositif d'étanchéité, disposé entre une portion arrière de la roue mobile de compresseur et le canal d'acheminement et configuré pour recevoir un flux d'air provenant du canal d'acheminement,
ledit procédé étant remarquable en ce qu'il comprend une étape de prélèvement d'une partie de l'air traversant le second dispositif d'étanchéité et une étape d'acheminement de l'air ainsi prélevé jusqu'au joint d'étanchéité du premier dispositif d'étanchéité de sorte à le maintenir sous pression.

D'autres caractéristiques et avantages de l'invention apparaîtront lors de la description qui suit, faite en regard des figures annexées données à titre d'exemples non limitatifs et dans lesquelles des références identiques sont données à des objets semblables :
- la figure 1 est une vue en coupe longitudinale d'un turbomoteur,
- la figure 2 est une vue partielle en coupe d'un turbomoteur selon l'invention,
- la figure 3 est une vue partielle en coupe du joint d'étanchéité du second dispositif d'étanchéité du turbomoteur de la figure 2,
- la figure 4 est une vue partielle en coupe du joint d'étanchéité du premier dispositif d'étanchéité du turbomoteur de la figure 2.

### DESCRIPTION DETAILLÉE

L'invention est décrite ci-après en relation avec un turbomoteur d'aéronef mais il va de soi qu'elle peut trouver son application plus généralement dans une turbomachine, notamment pour aéronef, comprenant tout type de compresseur, par exemple centrifuge, bi-centrifuge ou mixte.

Les termes « avant » et « arrière » désignent la position d'éléments localisés par rapport au sens de l'axe central X'X de rotation des pièces du turbomoteur, en particulier des rotors de compression et de détente, qui correspond au sens global du flux d'air traversant le turbomoteur en fonctionnement. De même, les termes « amont » et « aval » s'entendent par rapport au sens du flux d'air circulant dans la turbomachine.

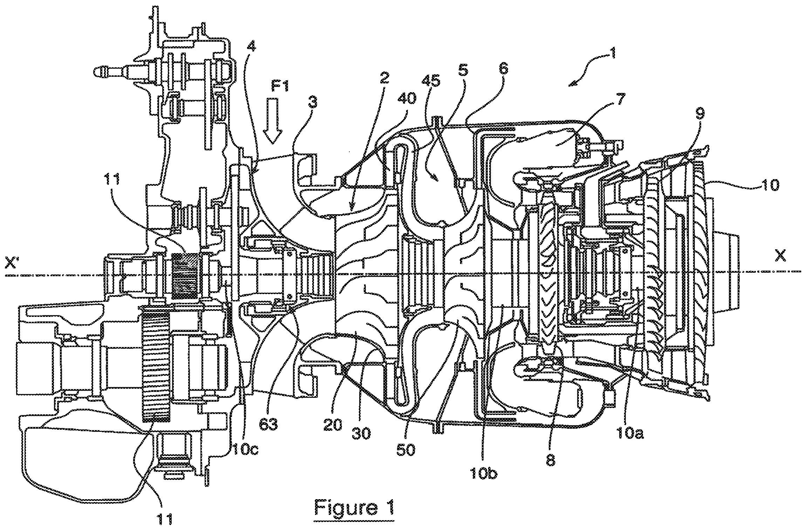

La figure 1 illustre schématiquement un turbomoteur d'hélicoptère 1 comprenant un premier étage de compression ou compresseur 2. Dans un tel turbomoteur, de l'air (flèche F1) est introduit dans une entrée d'air 3, entraîné dans un conduit d'entrée d'air 4 qui forme un canal débouchant sur le premier étage de compression 2. L'air comprimé par le premier étage de compression 2 est acheminé vers un second étage de compression 5.

L'air comprimé par le second étage 5 débouche par un diffuseur radial 6 et est ensuite injecté dans une chambre de combustion 7 pour y être mélangé au carburant et fournir, après combustion, l'énergie cinétique d'entraînement en rotation des turbines 8, 9 et 10. La turbine 8 entraine à son tour les compresseurs 5 et 2 via l'arbre 10b. Les turbines 9 et 10 transmettent de la puissance via l'arbre 10a pour entrainer via un réducteur de vitesse 11 par exemple un rotor d'hélicoptère et/ou des équipements (pompe, alternateurs, compresseur de charge...).

Chaque étage de compression comprend une roue mobile de compresseur, qui peut être axiale (compresseur axial), radiale (rouet compresseur centrifuge) ou mixte. Le turbomoteur illustré comprend deux étages de compression mais il va de soi que la turbomachine selon l'invention peut aussi comprendre un seul étage de compression ou bien plus de deux étages de compression.

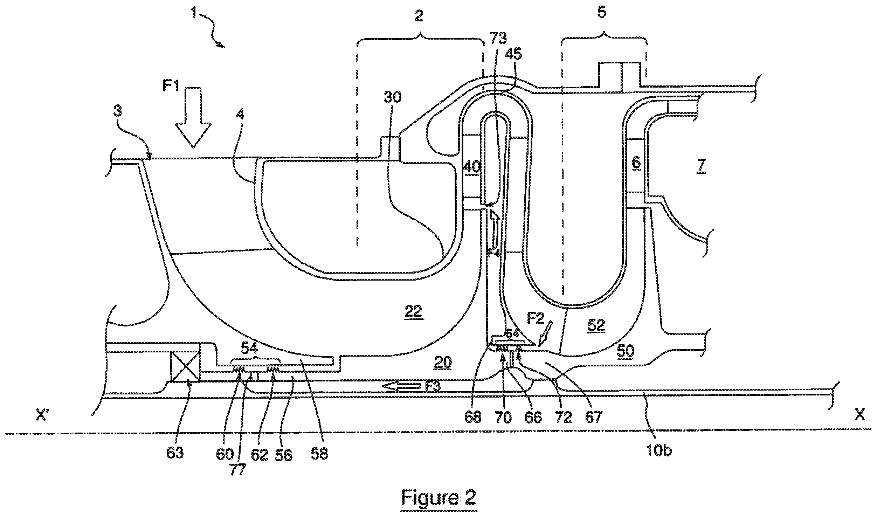

Le compresseur 2 comprend une première roue mobile 20 destinée à entrer en rotation à l'intérieur d'un carter 30 et comprenant des ailettes 22 de guidage du flux d'air (en référence à la figure 2). Dans cet exemple, le compresseur comprend un diffuseur aubagé 40 incliné dans le prolongement de la roue mobile 20.

Un canal d'acheminent d'air 45, couplé au diffuseur 40, s'étend entre le premier étage de compression 2 et le second étage de compression 5 sur lequel il débouche et permet d'acheminer l'air comprimé par le premier étage de compression 2 jusqu'au second étage de compression 5. Le second étage de compression 5 comprend une seconde roue mobile de compresseur 50 débouchant sur le diffuseur 6 et comprenant des ailettes 52 de guidage du flux d'air (en référence à la figure 2).

Comme illustré par la figure 2, le turbomoteur 1 comprend un premier dispositif d'étanchéité 54 disposé entre une portion avant 56 de la roue mobile de compresseur 20 et une portion axiale 58 du conduit d'entrée d'air 4. Ce premier dispositif d'étanchéité 54 comprend un joint d'étanchéité avant 60 et un joint d'étanchéité arrière 62 entre lesquels est ménagé un passage d'air 77.

Un palier de guidage 63 du rotor par rapport au stator est disposé en avant du premier dispositif d'étanchéité 54 et comprend de l'huile de lubrification maintenue dans le palier 63 par la pression de l'air au niveau du joint avant 62 du premier dispositif d'étanchéité 54.

Le turbomoteur 1 comprend un second dispositif d'étanchéité 64 disposé entre une portion arrière 66 de la roue mobile de compresseur 20, une portion avant 67 de la seconde roue mobile 50 et une portion 68 du canal d'acheminement 45 de l'air comprimé par la roue mobile 20, toutes trois s'étendant sensiblement dans une direction parallèle à l'axe X'X.

Ce second dispositif 64 comprend un joint d'étanchéité avant 70, disposé entre la portion 68 du canal d'acheminement 45 et la portion arrière 66 de la première roue mobile 20, et un joint d'étanchéité arrière 72, disposé entre la portion 68 du canal d'acheminement 45 et la portion avant 67 de la seconde roue mobile de compresseur 50.

Selon l'invention, le second dispositif d'étanchéité 64 est configuré pour autoriser un prélèvement d'une partie de l'air le traversant, l'air prélevé étant ici acheminé jusqu'au joint d'étanchéité avant 60 du premier dispositif d'étanchéité 54 de sorte à le maintenir sous pression.

Dans cet exemple, les joints d'étanchéité des dispositifs sont des joints à labyrinthe comprenant chacun un ensemble de léchettes annulaires, disposées consécutivement selon une direction parallèle à l'axe X'X, coopérant de manière connue avec un bloc en matériau abradable pour former le joint d'étanchéité.

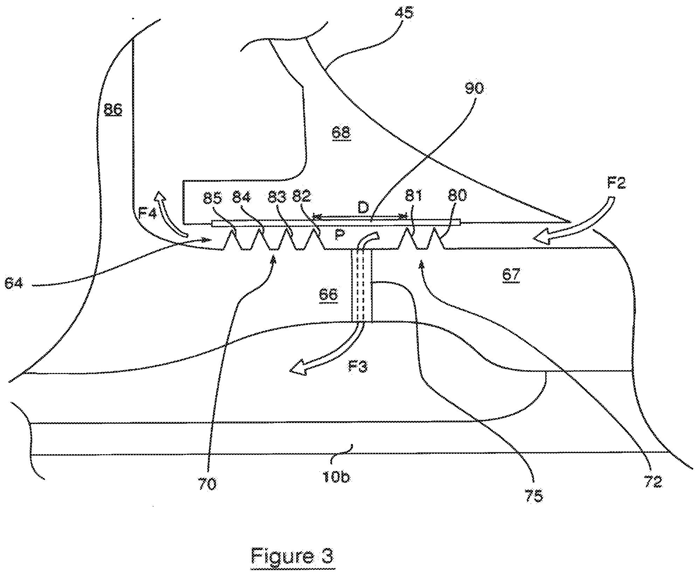

Comme illustré sur la figure 3, le flux d'air F3 maintenant le joint d'étanchéité avant 60 du premier dispositif 54 sous pression est prélevé entre le joint d'étanchéité arrière 72 et le joint d'étanchéité avant 70 du second dispositif 64.

Afin d'obtenir un débit d'air prélevé suffisamment élevé pour maintenir le joint d'étanchéité arrière 62 du premier dispositif 54 sous pression, le joint d'étanchéité arrière 72 du second dispositif 64 comprend, comme illustré sur la figure 3, deux léchettes 80 et 81 coopérant avec un bloc en matériau abradable 90 fixé sur la portion 68.

Le joint d'étanchéité avant 70 du second dispositif 64 comprend quatre léchettes 82, 83, 84 et 85 coopérant avec le bloc en matériau abradable 90 et permettant de rendre le débit du flux d'air traversant le joint avant 70 très faible voire quasi-nulle et éviter ainsi les perturbations dans la partie arrière 86 de la première roue mobile de compresseur 20.

En fonctionnement du turbomoteur 1, comme illustré sur la figure 2, le flux d'air FI entre dans le conduit d'entrée d'air 4, est comprimé par la première roue mobile de compresseur 20 puis est acheminé vers la seconde roue mobile de compresseur 50. Une portion F2 de ce flux d'air comprimé par la première roue mobile de compresseur 20 pénètre dans le second dispositif d'étanchéité 64.

Comme illustré sur la figure 3, le flux d'air F2 traverse, d'arrière en avant, le joint d'étanchéité arrière 72 jusqu'à une poche d'air sous pression P s'étendant sur une distance axiale D entre le joint d'étanchéité avant 70 et le joint d'étanchéité arrière 72.

Une partie F4 du flux F2 ayant traversé le joint d'étanchéité arrière 72 jusqu'à la poche d'air sous pression P traverse le joint d'étanchéité avant 70 jusqu'à un espace 86 situé derrière la première roue mobile de compresseur 20. Le débit du flux d'air F4 ayant traversé le joint d'étanchéité avant 70 est relativement faible voir quasi-nulle étant donné que l'air a traversé à la fois le joint arrière 72 puis le joint avant 70 qui est ici configuré spécifiquement pour réduire fortement le débit du flux F4. Cela permet de limiter fortement le débit du flux d'air F4 retournant, par un passage 73, dans le flux d'air comprimé par la première roue mobile 20, améliorant ainsi l'efficacité de la compression.

L'autre partie F3 du flux F2 ayant traversé le joint d'étanchéité arrière 72 jusqu'à la poche d'air sous pression P est prélevée pour être acheminée, à travers un passage 75, vers le joint d'étanchéité avant 60 du premier dispositif 54 de sorte à le maintenir sous pression.

Dans cet exemple, le passage 75 s'étend entre une portion arrière 66 de la première roue mobile de compresseur 20 et une portion avant 67 de la seconde roue mobile de compresseur 50. La liaison entre la portion arrière 66 de la première roue mobile de compresseur 20 et la portion avant 67 de la seconde roue mobile de compresseur 50 peut être réalisée, par exemple, par curvic coupling, de sorte que le passage 75 est alors ménagé entre les dents des engrenages.

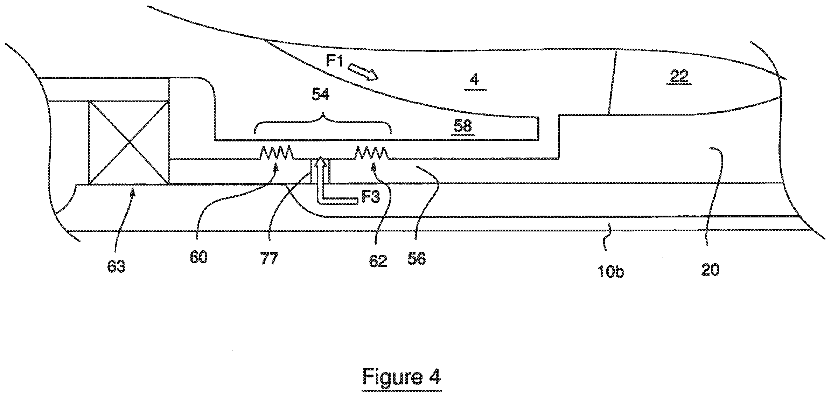

En référence à la figure 4, une fois le passage 75 traversé, le flux d'air F3 prélevé entre les deux joints 70 et 72 du second dispositif d'étanchéité 64 est acheminé jusqu'à un second passage 77 qu'il traverse pour atteindre la portion avant du joint d'étanchéité arrière 62 du premier dispositif d'étanchéité 54. Le joint d'étanchéité arrière 62 est alors maintenu sous pression par le flux d'air prélevé F3 de manière à éviter les fuites d'huile située à l'intérieur du premier dispositif, à travers le passage 77, dans le conduit d'entrée d'air 4 et/ou dans l'étage de compression 2.

L'invention permet donc d'assurer le maintien sous pression du ou des joints d'étanchéité du premier dispositif d'étanchéité et d'éviter ainsi les fuites d'huile liées à une baisse de pression de l'un des joints du premier dispositif, par exemple du joint d'étanchéité arrière, notamment en cas de baisse de pression dans le conduit d'entrée d'air de la turbomachine.

## Revendications

1. Turbomachine comprenant :
- un étage de compression d'air (2) comprenant au moins une roue mobile de compresseur (20),
- un conduit d'entrée d'air (4) couplé audit étage de compression d'air (2),
- un premier dispositif d'étanchéité (54), disposé entre une portion avant (56) de la roue mobile de compresseur (20) et le conduit d'entrée d'air (4), comprenant au moins un joint d'étanchéité (60),
- un canal d'acheminement (45) de l'air comprimé par la roue mobile (20),
- un second dispositif d'étanchéité (64), disposé entre une portion arrière (66) de la roue mobile de compresseur (20) et le canal d'acheminement (45)et configuré pour recevoir un flux d'air (F2) provenant du canal d'acheminement (45),
ladite turbomachine (1) étant **caractérisée en ce que** le second dispositif d'étanchéité (64) est configuré pour autoriser un prélèvement (F3) d'une partie de l'air le traversant, l'air prélevé (F3) étant acheminé jusqu'au joint d'étanchéité (60) du premier dispositif d'étanchéité (54) de sorte à le maintenir sous pression.

2. Turbomachine selon la revendication 1, dans laquelle le second dispositif d'étanchéité (64) comprend un joint d'étanchéité avant (70) et un joint d'étanchéité arrière (72), l'air étant prélevé entre les deux joints d'étanchéité (70, 72).

3. Turbomachine selon l'une des revendications précédentes, dans laquelle le second dispositif (64) comprend au moins un bloc en matériau abradable (90) et le ou les joints d'étanchéité (70, 72) du second dispositif d'étanchéité (64) sont des joints à labyrinthe comprenant chacun un ensemble de léchettes (80, 81 ; 82, 83, 84, 85) coopérant avec le ou les blocs en matériau abradable (90).

4. Turbomachine selon l'une des revendications 2 et 3, dans laquelle le joint d'étanchéité arrière (72) du second dispositif d'étanchéité (64) est configuré de sorte que le débit d'air prélevé est suffisant pour maintenir le joint d'étanchéité (60) du premier dispositif d'étanchéité (54) sous pression.

5. Turbomachine selon l'une des revendications 2 à 4, dans laquelle le joint d'étanchéité arrière (72) du second dispositif (64) comprend entre une et trois léchettes, de préférence deux léchettes.

6. Turbomachine selon l'une des revendications 2 à 5, dans laquelle le joint d'étanchéité avant (70) du second dispositif d'étanchéité (64) est configuré de sorte à réduire au maximum le débit d'air le traversant de manière à éviter les perturbations de l'écoulement d'air dans la partie arrière (86) de la roue mobile de compresseur (20) sur laquelle débouche ledit joint (70).

7. Turbomachine selon l'une des revendications 2 à 6, dans laquelle le joint d'étanchéité avant (70) du second dispositif (64) comprend au moins deux léchettes, de préférence quatre (82, 83, 84, 85).

8. Turbomachine selon l'une des revendications 2 à 7, dans laquelle le joint d'étanchéité arrière (72) du second dispositif d'étanchéité (64) et le joint d'étanchéité avant (70) du second dispositif d'étanchéité (64) sont espacés d'une distance (D) supérieure ou égale à 2 mm de sorte à former une poche (P) d'air sous pression dans laquelle l'air peut être prélevé pour être acheminé jusqu'au joint d'étanchéité (60, 62) du premier dispositif d'étanchéité (54).

9. Turbomachine selon l'une des revendications précédentes, ladite turbomachine (1) comprenant une seconde roue mobile de compresseur (50) dont une portion avant (67) est relié à une portion arrière (66) de la première roue mobile de compresseur (20) au niveau du second dispositif d'étanchéité (64) par un accouplement, de préférence à engrenage droit, dans lequel est ménagé un passage (75), l'air prélevé (F3) lors du passage du flux d'air à travers le second dispositif d'étanchéité (64) s'écoulant à travers ledit passage (75) avant d'être acheminé vers le joint (60) du premier dispositif (54) pour le maintenir sous pression.

10. Procédé pour maintenir sous pression au moins un joint d'étanchéité par prélèvement d'air dans une turbomachine (1) comprenant :
- un étage de compression d'air (2) comprenant au moins une roue mobile de compresseur (20),
- un conduit d'entrée d'air (4) couplé audit étage de compression d'air (2),
- un premier dispositif d'étanchéité (54), disposé entre une portion avant (56) de la roue mobile de compresseur (20) et le conduit d'entrée d'air (4), comprenant au moins un joint d'étanchéité (60),
- un canal d'acheminement (45) de l'air comprimé par la roue mobile (20),
- un second dispositif d'étanchéité (64) disposé entre une portion arrière (66) de la roue mobile de compresseur (20) et le canal d'acheminement (45) et configuré pour recevoir un flux d'air (F2) provenant du canal d'acheminement (45),
ledit procédé étant **caractérisé en ce qu'**il comprend une étape de prélèvement d'une partie (F3) de l'air traversant le second dispositif d'étanchéité (64) et une étape d'acheminement de l'air ainsi prélevé (F3) jusqu'au joint d'étanchéité (60) du premier dispositif d'étanchéité (54) de sorte à le maintenir sous pression.

## Patentansprüche

1. Turbomaschine, umfassend:
- eine Luftverdichtungsstufe (2), die mindestens ein bewegliches Verdichterrad (20) umfasst,
- eine Lufteingangsleitung (4), die mit der Luftverdichtungsstufe (2) gekoppelt ist,
- eine erste Dichtungsvorrichtung (54), die zwischen einem vorderen Abschnitt (56) des beweglichen Verdichterrads (20) und der Lufteingangsleitung (4) angeordnete, die mindestens eine Dichtung (60) umfasst,
- einen Kanal zum Befördern (45) der vom beweglichen Rad (20) verdichteten Luft,
- eine zweite Dichtungsvorrichtung (64), die zwischen einem hinteren Abschnitt (66) des beweglichen Verdichterrads (20) und dem Kanal zum Befördern (45) angeordnet und dafür ausgebildet ist, einen aus dem Kanal zum Befördern (45) kommenden Luftstrom (F2) aufzunehmen,
wobei die Turbomaschine (1) **dadurch gekennzeichnet ist, dass** die zweite Dichtungsvorrichtung (64) dafür ausgebildet ist, eine Entnahme (F3) eines Teils der sie durchströmenden Luft zu gestatten, wobei die entnommene Luft (F3) bis zur Dichtung (60) der ersten Dichtungsvorrichtung (54) befördert wird, um dieselbe unter Druck zu halten.

2. Turbomaschine nach Anspruch 1, wobei die zweite Dichtungsvorrichtung (64) eine vordere Dichtung (70) und eine hintere Dichtung (72) umfasst, wobei die Luft zwischen den zwei Dichtungen (70, 72) entnommen wird.

3. Turbomaschine nach einem der vorstehenden Ansprüche, wobei die zweite Vorrichtung (64) mindestens einen Block aus abriebfähigem Material (90) umfasst, und die Dichtung(en) (70, 72) der zweiten Dichtungsvorrichtung (64) Labyrinthdichtungen sind, die jede einen Satz von Zungen (80, 81; 82, 83, 84, 85) umfassen, welche mit dem oder den Blöcken aus abriebfähigem Material (90) zusammenwirken.

4. Turbomaschine nach einem der Ansprüche 2 und 3, wobei die hintere Dichtung (72) der zweiten Dichtungsvorrichtung (64) so ausgebildet ist, dass der entnommene Luftdurchsatz ausreichend ist, um die Dichtung (60) der ersten Dichtungsvorrichtung (54) unter Druck zu halten.

5. Turbomaschine nach einem der Ansprüche 2 bis 4, wobei die hintere Dichtung (72) der zweiten Vorrichtung (64) zwischen einer und drei von Zungen, vorzugsweise zwei von Zungen umfasst.

6. Turbomaschine nach einem der Ansprüche 2 bis 5, wobei die vordere Dichtung (70) der zweiten Dichtungsvorrichtung (64) so ausgebildet ist, dass sie den sie durchströmenden Luftdurchsatz maximal reduziert, um die Beeinträchtigungen der Luftströmung im hinteren Teil (86) des beweglichen Verdichterrads (20), an dem die Dichtung (70) mündet, zu verhindern.

7. Turbomaschine nach einem der Ansprüche 2 bis 6, wobei die vordere Dichtung (70) der zweiten Vorrichtung (64) mindestens zwei von Zungen, vorzugsweise vier von Zungen (82, 83, 84, 85) umfasst.

8. Turbomaschine nach einem der Ansprüche 2 bis 7, wobei die hintere Dichtung (72) der zweiten Dichtungsvorrichtung (64) und die vordere Dichtung (70) der zweiten Dichtungsvorrichtung (64) um einen Abstand (D) von größer oder gleich 2 mm beabstandet sind, sodass eine unter Druck stehende Lufttasche (P) gebildet wird, in der die Luft entnommen werden kann, um bis zur Dichtung (60, 62) der ersten Dichtungsvorrichtung (54) befördert zu werden.

9. Turbomaschine nach einem der vorstehenden Ansprüche, wobei die Turbomaschine (1) ein zweites bewegliches Verdichterrad (50) umfasst, von dem ein vorderer Abschnitt (67) im Bereich der zweiten Dichtungsvorrichtung (64) über eine Kopplung, vorzugsweise mit Stirnrad, in dem ein Durchgang (75) ausgestaltet ist, mit einem hinteren Abschnitt (66) des ersten beweglichen Verdichterrads (20) verbunden ist, wobei die beim Durchgang des Luftstroms durch die zweite Dichtungsvorrichtung (64) entnommene Luft (F3) den Durchgang (75) durchströmt, bevor sie zur Dichtung (60) der ersten Vorrichtung (54) befördert wird, um dieselbe unter Druck zu halten.

10. Verfahren, um mindestens eine Dichtung durch Entnahme von Luft in einer Turbomaschine (1) unter Druck zu halten, umfassend:
- eine Luftverdichtungsstufe (2), die mindestens ein bewegliches Verdichterrad (20) umfasst,
- eine Lufteingangsleitung (4), die mit der Luftverdichtungsstufe (2) gekoppelt ist,
- eine erste Dichtungsvorrichtung (54), zwischen einem vorderen Abschnitt (56) des beweglichen Verdichterrads (20) und der Lufteingangsleitung (4) angeordnete, die mindestens eine Dichtung (60) umfasst,
- einen Kanal zum Befördern (45) der vom beweglichen Rad (20) verdichteten Luft,
- eine zweite Dichtungsvorrichtung (64), die zwischen einem hinteren Abschnitt (66) des beweglichen Verdichterrads (20) und dem Kanal zum Befördern (45) angeordnet und dafür ausgebildet ist, einen aus dem Kanal zum Befördern (45) kommenden Luftstrom (F2) aufzunehmen,
wobei das Verfahren **dadurch gekennzeichnet ist, dass** es einen Schritt der Entnahme eines Teils (F3) der die zweite Dichtungsvorrichtung (64) durchströmenden Luft, und einen Schritt des Beförderns der so entnommenen Luft (F3) bis zur Dichtung (60) der ersten Dichtungsvorrichtung (54) umfasst, um dieselbe unter Druck zu halten.

## Claims

1. Turbine engine, comprising:
- an air compression stage (2) which comprises at least one movable compressor wheel (20),
- an air inlet duct (4) which is coupled to said air compression stage (2),
- a first sealing device (54), which is arranged between a front portion (56) of the movable compressor wheel (20) and the air inlet duct (4), comprising at least one seal (60),
- a channel (45) for conveying the air compressed by the movable wheel (20),
- a second sealing device (64), which is arranged between a rear portion (66) of the movable compressor wheel (20) and the conveying channel (45) and is configured to receive an airflow (F2) coming from the conveying channel (45),
said turbine engine (1) being **characterised in that** the second sealing device (64) is configured to allow some of the air passing therethrough to be bled (F3), the bleed air (F3) being conveyed to the seal (60) of the first sealing device (54) so as to keep it under pressure.

2. Turbine engine according to claim 1, wherein the second sealing device (64) comprises a front seal (70) and a rear seal (72), the air being bled between the two seals (70, 72).

3. Turbine engine according to any of the preceding claims, wherein the second device (64) comprises at least one block of abradable material (90) and the seal or seals (70, 72) of the second sealing device (64) are labyrinth seals which each comprise an assembly of sealing strips (80, 81; 82, 83, 84, 85) which cooperate with the block or blocks of abradable material (90).

4. Turbine engine according to either claim 2 or claim 3, wherein the rear seal (72) of the second sealing device (64) is configured such that the flow rate of bleed air is sufficient to keep the seal (60) of the first sealing device (54) under pressure.

5. Turbine engine according to any of claims 2 to 4, wherein the rear seal (72) of the second device (64) comprises between one and three sealing strips, preferably two sealing strips.

6. Turbine engine according to any of claims 2 to 5, wherein the front seal (70) of the second sealing device (64) is configured so as to reduce the flow rate of air passing therethrough as much as possible so as to avoid disturbing the flow of air in the rear part (86) of the movable compressor wheel (20) onto which said joint (70) opens.

7. Turbine engine according to any of claims 2 to 6, wherein the front seal (70) of the second device (64) comprises at least two sealing strips, preferably four (82, 83, 84, 85).

8. Turbine engine according to any of claims 2 to 7, wherein the rear seal (72) of the second sealing device (64) and the front seal (70) of the second sealing device (64) are spaced apart by a distance (D) which is greater than or equal to 2 mm, so as to form a pressurised air pocket (P) in which the air can be bled in order to be conveyed to the seal (60, 62) of the first sealing device (54).

9. Turbine engine according to any of the preceding claims, said turbine engine (1) comprising a second movable compressor wheel (50) of which a front portion (67) is connected to a rear portion (66) of the first movable compressor wheel (20) in the region of the second sealing device (64) by a coupling, preferably a curvic coupling, in which a passage (75) is made, the air (F3) which is bled as the airflow passes through the second sealing device (64) flowing through said passage (75) before being conveyed towards the seal (60) of the first device (54) in order to keep it under pressure.

10. Method for keeping at least one seal under pressure by bleeding air in a turbine engine (1), comprising:
- an air compression stage (2) comprising at least one movable compressor wheel (20),
- an air inlet duct (4) coupled to said air compression stage (2),
- a first sealing device (54), which is arranged between a front portion (56) of the movable compressor wheel (20) and the air inlet duct (4), comprising at least one seal (60),
- a channel (45) for conveying the air compressed by the movable wheel (20),
- a second sealing device (64), which is arranged between a rear portion (66) of the movable compressor wheel (20) and the conveying channel (45) and is configured to receive an airflow (F2) coming from the conveying channel (45),
said method being **characterised in that** it comprises a step of bleeding some (F3) of the air passing through the second sealing device (64) and a step of conveying the air (F3) which is thus bled to the seal (60) of the first sealing device (54) so as to keep it under pressure.
